# EUROPÄISCHE PATENTSCHRIFT

(11) **EP 2 669 565 B1**
(45) Veröffentlichungstag und Bekanntmachung des Hinweises auf die Patenterteilung: **06.08.2014**
(21) Anmeldenummer: 12405050.1
(22) Anmeldetag: 29.05.2012
(51) Int. Cl.: F16L 55/1645

(54) **Vorrichtung zum Überprüfen und Abdichten von Rohrverbindungen und Verfahren zu ihrer Verwendung**
Device for testing and sealing tube connections and method for using same
Dispositif de contrôle et d'étanchéification de connexions de tuyaux et leur procédé d'utilisation

(43) Veröffentlichungstag der Anmeldung: 04.12.2013
(73) Patentinhaber: HeSan GmbH, 8856 Tuggen (CH)
(72) Erfinder: Hegner, Rolf, 8854 Galgenen (CH)
(74) Vertreter: Wagner, Wolfgang Heribert

(56) Entgegenhaltungen:
- WO-A1-00/47928
- DE-A1- 4 336 435
- US-A- 3 618 639
- US-A- 3 834 421

## Beschreibung

### Technisches Gebiet

Die Erfindung betrifft eine Vorrichtung zum Überprüfen und Abdichten von Rohrverbindungen sowie ein Verfahren zu ihrer Verwendung. Vorrichtungen der beschriebenen Art werden vor allem in Abwassersystemen zur Feststellung von Undichtheiten von Rohren und insbesondere von Muffen an Stossstellen zwischen aufeinanderfolgenden Rohren und zur Reparatur der Rohrverbindungen an festgestellten undichten Stellen eingesetzt.

### Stand der Technik

Aus US 3 618 639 A ist eine gattungsgemässe Vorrichtung bekannt, bei welcher die Dichtkörper als Gummirohre ausgebildet sind, welche im Grundzustand jeweils ein Metallrohr mit geringem Abstand umgeben. Sie sind durch ein Zwischenstück verbunden, das als ebenfalls aus Metall bestehender Ring ausgebildet ist. Die.Rohre und der Ring umgeben einen Hohlraum, in welchem eine Druckleitung und zwei Stoffzuleitungen geführt sind. Die Druckleitung ist durch Öffnungen in den Metallrohren mit den Zwischenräumen zwischen denselben und den sie umgebenden Dichtkörpern verbunden. Die Stoffzuleitungen münden in Abgabeöffnungen im Zwischenstück, sodass nach dem Aufblasen der Dichtkörper, durch das ein Reparaturbereich abgetrennt wird, dort Abdichtmaterial eingeleitet werden kann.

Wegen der Metallrohre und wegen des Ringes ist die Vorrichtung völlig starr und daher nicht bogengängig. Sie kann daher in Rohrverbindungen mit Bögen praktisch nicht eingesetzt werden.

Ähnliche Vorrichtungen, bei denen auch ein Zwischenbereich zwischen den Dichtkörpern mit der Aussenseite gegen die Innenwand des Rohres drückt, sodass das eingeleitete Abdichtmaterial gegen besagte Innenwand gepresst wird, sind als Packer bekannt.

Eine flexible Vorrichtung dieser Art, bei der auch der Zwischenbereich aufblasbar ist, ist in US 6 276 398 B1 beschrieben. Sie ist zwar bogengängig, aber vergleichsweise komplex und auch schwieriger zu bedienen.

Einfacher aufgebaute solche Vorrichtungen, die aber starr und damit ebenfalls nicht bogengängig sind, sind EP 0 533 999 B1 und DE 39 13 317 A1 zu entnehmen.

Im wesentlichen wie die oben erwähnte gattungsgemässe Vorrichtung ist die in US 3 834 422 A beschriebene aufgebaut, wobei aber Dichtkörper und Zwischenstück ausserdem von einer zylindrischen Hülle aus elastischem Material umgeben sind. Auch diese Vorrichtung ist starr und daher nicht bogengängig.

### Darstellung der Erfindung

Der Erfindung liegt die Aufgabe zugrunde, eine gattungsgemässe Vorrichtung anzugeben, welche gut bogengängig ist, sodass sie auch in Rohrverbindungen mit Bögen problemlos einsetzbar ist. Diese Aufgabe wird durch die Merkmale im kennzeichnenden Teil des Anspruchs 1 gelöst. Die erfindungsgemässe Vorrichtung ist für den Einsatz in Rohrverbindungen mit Bögen bis zu 90° geeignet, bei entsprechender Dimensionierung auch dann, wenn die Rohre eng sind, z.B. zwischen 100mm und 150mm Innendurchmesser aufweisen. Dabei ist die erfindungsgemässe Vorrichtung einfach aufgebaut und auch einfach zu bedienen.

Die Erfindung umfasst auch ein Verfahren zur Verwendung der erfindungsgemässen Vorrichtung, bei welchem dieselbe in einfacher und zuverlässiger Weise zum Überprüfen und erforderlichenfalls auch zum Abdichten einer undichten Stelle eingesetzt wird.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: einen Längsschnitt durch eine erfindungsgemässe Vorrichtung,
- Fig. 2: eine Ansicht der erfindungsgemässen Vorrichtung nach Fig. 1 in der Richtung des mit II bezeichneten Pfeils und
- Fig. 3: einen Längsschnitt durch eine auswechselbare Spitze gemäss einer abweichenden Ausbildung.

### Wege zur Ausführung der Erfindung

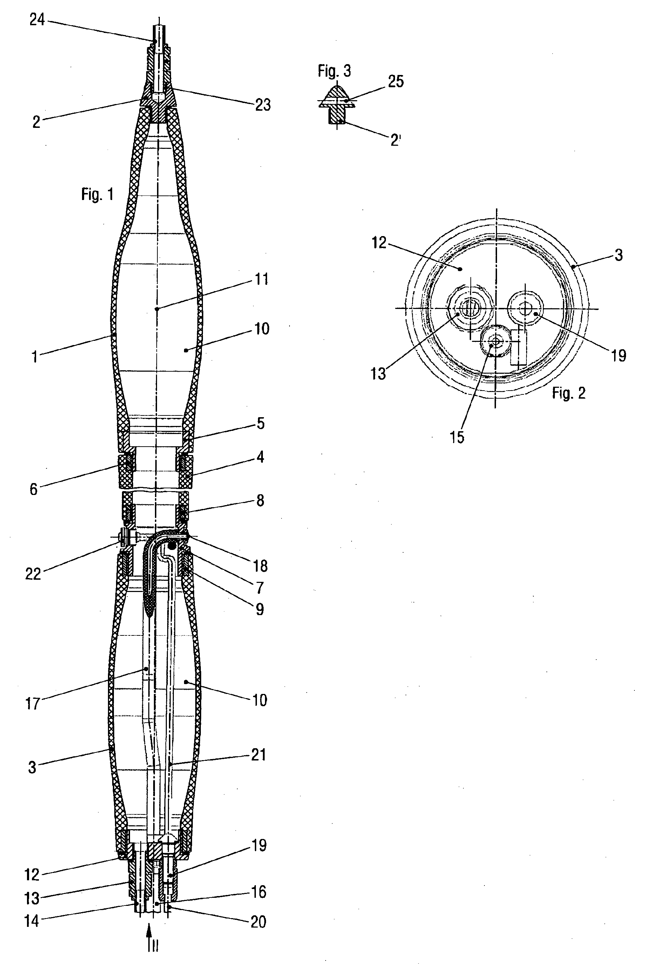

Wie aus Fig. 1 ersichtlich weist die erfindungsgemässe Vorrichtung einen ersten elastisch biegsamen Dichtkörper 1 auf. Es handelt sich um einen Hohlkörper aus einem elastisch dehnbaren flächigen, d.h. verhältnismässig dünnen Material, mit einem annähernd zylindrischen, dabei leicht konvexen Abschnitt, an den ein gegen ein Vorderende hin sich verjüngender, annähernd konischer Abschnitt anschliesst, welcher in eine Öffnung ausläuft mit einem Innengewinde, in welche eine das Vorderende der Vorrichtung bildende auswechselbare Spitze 2 eingeschraubt ist.

In Längsrichtung davon beabstandet ist ein im übrigen ähnlicher, insbesondere ebenfalls elastisch biegsamer zweiter Dichtkörper 3 angeordnet, welcher annähernd zylindrische Form hat und leicht konvex ist. Er besteht aus dem gleichen Material wie der erste Dichtkörper 1. Der erste Dichtkörper 1 und der zweite Dichtkörper 3 sind durch ein Zwischenstück 4 miteinander verbunden, das etwa gleich lang wie der erste Dichtkörper 1 sein kann, aber auch länger oder kürzer, je nach Dimension und vorgesehenem Einsatzbereich.

Das Zwischenstück 4 ist als Rohr ausgebildet und besteht ebenfalls aus elastisch dehnbarem Material, sodass es biegsam ist, und zwar so, dass der zweite Dichtkörper 3 gegenüber dem ersten Dichtkörper 1 um mindestens 30°, vorzugsweise um mindestens 90° abgebogen werden kann, sodass die Vorrichtung auch durch 90°-Bögen eines engen Rohres gezogen oder geschoben werden kann. Dabei ist die Wand des Zwischenstücks 4 jedoch wenig dehnbar, sodass es im übrigen formstabil ist. Es kann aus dem gleichen Material bestehen wie die Dichtkörper 1, 3, wobei seine vergleichsweise geringe Dehnbarkeit durch eine höhere Wandstärke, die etwa das 2- bis 3-fache der minimalen Wandstärke der Dichtkörper 1, 3 betragen kann, erreicht wird. Die Bogengängigkeit der Vorrichtung wird durch die Biegsamkeit der Dichtkörper 1, 3 unterstützt sowie durch den Umstand, dass sich der vordere Teil des ersten Dichtkörpers 1 gegen das Vorderende hin verjüngt.

Das Zwischenstück 4 ist mit dem ersten Dichtkörper 1 durch einen Kupplungsring verbunden, der als auf den ersten Dichtkörper 1 aufvulkanisierte erste Gewindehülse 5 ausgebildet ist, welche mit einem auf das Zwischenstück 4 aufvulkanisierten ersten Gewindering 6 verschraubt ist. Ein weiterer Kupplungsring ist als etwas längere zweite Gewindehülse 7 ausgebildet, die mit einem ebenfalls auf das Zwischenstück 4 aufvulkanisierten zweiten Gewindering 8 und einem auf den zweiten Dichtkörper 3 aufvulkanisierten dritten Gewindering 9 verschraubt ist und so die Verbindung zwischen dem Zwischenstück 4 und dem zweiten Dichtkörper 3 herstellt.

Die beiden Dichtkörper 1, 3 und das Zwischenstück 4 umschliessen, zusammen mit den Gewindehülsen 5, 7, einen zusammenhängenden Hohlraum 10 und sind im wesentlichen um eine Längsachse 11 rotationssymmetrisch. An einem Hinterende der Vorrichtung ist der zweite Dichtkörper 3 durch eine Anschlussplatte 12 (s. auch Fig. 2) verschlossen. Sie weist ein Kupplungsstück auf, welches als Druckluftanschluss 13 dient, an den eine Druckluftleitung 14 anschliessbar ist und die unmittelbar in den Hohlraum 10 mündet. Weiter weist sie einen Stoffanschluss 15 für den Anschluss einer Stoffzuleitung 16 auf, an welchen an der Innenseite eine Verbindungsleitung 17 anschliesst, ein Schlauch, der durch den vom zweiten Dichtkörper 3 umgebenen Teil des Hohlraums 10 zu einer Abgabeöffnung 18 in der zweiten Gewindehülse 7 führt.

Über den Druckluftanschluss 13 kann als Druckmedium Druckluft zugeführt werden, während über den Stoffanschluss 15 ebenfalls Luft als Druckmedium oder Wasser oder ein Abdichtmittel zugeführt werden kann. Weiter weist die Anschlussplatte 12 einen Kabelanschluss 19 auf, an welchen ein Kamerakabel 20 anschliessbar ist und der mittels eines Verbindungskabels 21, das durch den vom zweiten Dichtkörper 3 umgebenen Teil des Hohlraums 10 läuft, mit einer nach aussen gerichteten Kamera 22 verbunden ist, welche in einer radialen Gewindebohrung in der zweiten Gewindehülse 7 eingesetzt ist.

Beim Einsatz kann am Vorderende an die Spitze 2, die zu diesem Zweck eine Gewindebohrung 23 aufweist, ein Schiebeaal 24 angeschlossen werden. Alternativ kann die in Fig. 3 dargestellte Spitze 2' eingesetzt werden, die mit einer Querbohrung 25 versehen ist, durch welche eine Schnur gezogen werden kann. Am Hinterende dient die entsprechend ausgebildete Druckluftleitung 14 zugleich als Schiebeaal.

Die Dimensionen der Vorrichtung richten sich natürlich nach dem Einsatzbereich, vor allem dem Innendurchmesser der Rohre, die überprüft und abgedichtet werden sollen. Für Rohre von einem Innendurchmesser zwischen 100mm und 150mm kann etwa der Durchmesser der Dichtkörper 1, 3 zwischen 80mm und knapp 100mm betragen und ihre Länge zwischen 250mm und 350mm. Die Länge des Zwischenstücks 4 kann zwischen 100mm und 400mm, vorzugsweise zwischen 150mm und 250mm liegen. Durch Einleiten von Luft über den Druckluftanschluss 13 in den Hohlraum 10 kann der Durchmesser vor allem im mittleren Bereich des zylindrischen Abschnitts des ersten Dichtkörpers 1 und im mittleren Bereich des zweiten Dichtkörpers 3, wo die Wandstärke jeweils verhältnismässig gering ist, gegenüber dem in Fig. 1 gezeigten Grundzustand stark vergrössert werden, wobei die Grenze der Vergrösserung vorzugsweise zwischen 50% und 100% liegt. Der Durchmesser des Zwischenabschnitts 4 erhöht sich dabei wegen der vergleichsweise grossen Wandstärke nur unwesentlich.

Als Material für den ersten Dichtkörper 1, den zweiten Dichtkörper 3 und das Zwischenstück 4 eignet sich am besten Gummi, der mit Kevlar verstärkt sein kann. Die Gewindehülsen 5, 7 und die Gewinderinge 6, 8 und 9 bestehen aus Metall, insbesondere aus Messing oder Edelstahl.

Wird eine Undichtheit an einer Rohrverbindung eines Abwasserleitungssystems - gewöhnlich an einer Muffe - vermutet, so kann die erfindungsgemässe Vorrichtung in dasselbe eingeführt werden. Dazu werden am Hinterende die Druckluftleitung 14, die Stoffzuleitung 16 und das Kamerakabel 20 angeschlossen und am Vorderende der Schiebeaal 24 oder eine Schnur festgemacht. Der Hohlraum 10 ist über die Druckluftleitung 14 mit einem Druckluftaggregat verbunden, die Abgabeöffnung 18 über die Verbindungsleitung 17 und die Stoffzuleitung 16 mit dem Druckluftaggregat oder einer Kleberpumpe, mit der die Stoffzuleitung 16 wahlweise verbindbar ist, und die Kamera 22 über das Verbindungskabel 21 und das Kamerakabel 20 mit einem Bildschirm.

Die Vorrichtung wird dann so weit durch die Rohrverbindung geschoben und gezogen, bis mittels der Kamera 22 die vermutlich undichte Muffe festgestellt wird. Dabei können dank der Biegsamkeit des Zwischenstücks 4 auch stark, z.B. um 90° gekrümmte Rohrabschnitte überwunden und die Vorrichtung wenn nötig auch durch Verzweigungen gezogen werden.

Anschliessend wird die Dichtigkeit der Muffe überprüft. Dazu wird über die Druckluftleitung 14 Druckluft in den Hohlraum 10 geleitet und die Dichtkörper 1, 3 aufgeblasen, bis sie an der Innenwand des Abwasserrohres fest anliegen und einen zwischen ihnen liegenden Prüfraum dicht vom verbleibenden von der Rohrverbindung umschlossenen Raum abtrennen. Dann wird wiederum als Druckmedium Luft über die Stoffzuleitung 16, die Verbindungsleitung 17 und die Abgabeöffnung 18 in den Prüfraum gepresst und dort ein Überdruck von z.B. 200mbar aufgebaut. Anschliessend wird überprüft, ob der Abschluss des Prüfraums dicht ist oder ob, etwa wegen Verunreinigungen an einem der Dichtkörper 1, 3, Luft zwischen demselben und der Innenwand des Rohres entweicht. Dies kann etwa mittels an den Schiebeaalen 14, 24 angebrachten Mikrophonen geschehen, welche allfällige Geräusche, die durch das Entweichen von Luft zwischen einem der Dichtkörper 1, 3 und der Innenwand des ihn umgebenden Rohres verursacht werden, feststellen.

Wenn keine derartigen Geräusche festgestellt und somit der Abschluss dicht befunden wurde und dennoch ein Druckabfall im Prüfraum eintritt, so wird auf Undichtheit der Muffe geschlossen und der den Prüfraum umgebende Abschnitt der Rohrverbindung zum Reparaturabschnitt, der abgedichtet werden muss. Zu diesem Zweck wird, ebenfalls über die Stoffzuleitung 16, die dazu mit der Kleberpumpe verbunden wird, Abdichtmittel zugeführt, das aus einem Polyurethan enthaltenden Dichtmittel und einem Härter besteht und das durch die undichte Stelle oder die undichten Stellen entweicht und mit der Umgebungsfeuchtigkeit reagiert, sodass es expandiert und mit Sand, Kies oder Beton in der Umgebung des Rohres eine feste Verbindung eingeht und gegen die Rohraussenseite gepresst wird, mit der es sich auch verbinden kann. Jedenfalls bildet es mit dem Umgebungsmaterial eine Mischung, welche das Rohr umgibt. Anschliessend lässt man die Druckluft aus den Dichtkörpern 1, 3 entweichen, sodass dieselben wieder ihren Grundzustand annehmen und zieht die Vorrichtung mit dem Schiebeaal 24 oder der Schnur aus dem Abwasserrohr. Das Rohr wird dann mit einer Spülflüssigkeit, vorzugsweise Wasser, gespült und überflüssiges Abdichtmittel, das sich im Reparaturabschnitt an der Innenwand des Rohres angelagert hat, entfernt.

Nach dem Aushärten des Dichtmittels dichten die besagte Mischung und das die undichte Stelle ausfüllende Dichtmittel die Rohrverbindung ab. Die Aushärtezeit des Dichtmittels kann durch den Anteil des zugemischten Härters eingestellt werden. Sie hängt ausserdem von der Temperatur im Rohr und seiner Umgebung ab und kann zwischen ca. einer Minute und mehreren Minuten betragen. Als Dichtmittel kann etwa MG-SLV und als Härter MG-Accelerator eingesetzt werden. Zu empfehlen ist auch, die Vorrichtung sowie Leitungen und Kabel vor dem Einsatz mit MG-Pumpflush einzusprühen, was das Entfernen von Dichtmittel, das sich auf der Vorrichtung abgelagert hat, nach dem Einsatz wesentlich erleichtert. Die besagten Artikel können von IJP-Zuerisee,
Staldenbachstrasse 5, CH-8808 Pfäffikon SZ bezogen werden.

### Bezugszeichenliste

- 1: erster Dichtkörper
- 2, 2': Spitze
- 3: zweiter Dichtkörper
- 4: Zwischenstück
- 5: erste Gewindehülse
- 6: erster Gewindering
- 7: zweite Gewindehülse
- 8: zweiter Gewindering
- 9: dritter Gewindering
- 10: Hohlraum
- 11: Längsachse
- 12: Anschlussplatte
- 13: Druckluftanschluss
- 14: Druckluftleitung
- 15: Stoffanschluss
- 16: Stoffzuleitung
- 17: Verbindungsleitung
- 18: Abgabeöffnung
- 19: Kabelanschluss
- 20: Kamerakabel
- 21: Verbindungskabel
- 22: Kamera
- 23: Gewindebohrung
- 24: Schiebeaal
- 25: Querbohrung

## Patentansprüche

1. Vorrichtung zum Überprüfen und Reparieren von Rohren, mit einem ersten Dichtkörper (1) und einem in einer Längsrichtung von demselben beabstandeten zweiten Dichtkörper (3), welche jeweils aus einem elastisch dehnbaren flächigen Material bestehen, derart, dass sie ausgehend von einem Grundzustand durch Einleiten eines Druckmediums aufblasbar sind, sodass ihr Durchmesser grösser ist als im Grundzustand, und mit einem Zwischenstück (4), das den ersten Dichtkörper (1) und den zweiten Dichtkörper (3) verbindet, sowie mit, an einem Hinterende, einer den zweiten Dichtkörper (3) abschliessenden Anschlussplatte (12), an welcher ein Druckluftanschluss (13) für den Anschluss einer Druckluftleitung (14) und ein durch eine Verbindungsleitung (17) mit einer Abgabeöffnung (18) im Bereich des Zwischenstücks (4) verbundener Stoffanschluss (15) für den Anschluss einer Stoffzuleitung (16) angeordnet sind, **dadurch gekennzeichnet, dass** das Zwischenstück (4) als biegsames, aber im übrigen formstabiles Rohr ausgebildet ist und der erste Dichtkörper (1), der zweite Dichtkörper (3) und das Zwischenstück (4) einen gemeinsamen Hohlraum (10) umschliessen, mit dem der Druckluftanschluss (13) verbunden ist.

2. Vorrichtung nach Anspruch 1, **dadurch gekennzeichnet, dass** die Biegsamkeit des Zwischenstücks (4) so gross ist, dass der zweite Dichtkörper (3) gegenüber dem ersten Dichtkörper (1) um mindestens 30° abbiegbar ist.

3. Vorrichtung nach Anspruch 1 oder 2, **dadurch gekennzeichnet, dass** der erste Dichtkörper (1) und der zweite Dichtkörper (3) im Grundzustand jeweils einen grösseren Durchmesser aufweisen als das Zwischenstück (4).

4. Vorrichtung nach einem der Ansprüche 1 bis 3, **dadurch gekennzeichnet, dass** der erste Dichtkörper (1) sich gegen ein Vorderende hin verjüngt.

5. Vorrichtung nach einem der Ansprüche 1 bis 4, **dadurch gekennzeichnet, dass** der erste Dichtkörper (1), der zweite Dichtkörper (3) und das Zwischenstück (4) um eine gemeinsame Längsachse (11) rotationssymmetrisch sind.

6. Vorrichtung nach einem der Ansprüche 1 bis 5, **dadurch gekennzeichnet, dass** der erste Dichtkörper (1), der zweite Dichtkörper (3) und das Zwischenstück (4) aus dem selben Material bestehen, wobei die Wandstärke des Zwischenstücks (4) grösser ist als die Wandstärken der Dichtkörper (1, 3).

7. Vorrichtung nach Anspruch 6, **dadurch gekennzeichnet, dass** die Wandstärke des Zwischenstücks (4) zwischen dem 3- und 5-fachen der minimalen Wandstärke der Dichtkörper (1, 3) beträgt.

8. Vorrichtung nach einem der Ansprüche 1 bis 7, **dadurch gekennzeichnet, dass** das Zwischenstück (4) mit dem ersten Dichtkörper (1) durch eine starre erste Gewindehülse (5) und mit dem zweiten Dichtkörper (3) durch eine starre zweite Gewindehülse (7) verbunden ist.

9. Vorrichtung nach Anspruch 8, **dadurch gekennzeichnet, dass** die Abgabeöffnung (18) in einer Wand der zweiten Gewindehülse (7) angeordnet ist.

10. Vorrichtung nach einem der Ansprüche 1 bis 9, **dadurch gekennzeichnet, dass** in einer Öffnung an der ersten Gewindehülse (5) oder der zweiten Gewindehülse (7) eine nach aussen gerichtete Kamera (22) angeordnet ist, welche mittels eines Verbindungskabels (21) mit einem Kabelanschluss (19) an der Anschlussplatte (12) verbunden ist.

11. Vorrichtung nach einem der Ansprüche 1 bis 10, **dadurch gekennzeichnet, dass** der erste Dichtkörper (1) an einem Vorderende eine auswechselbare Spitze (2, 2') trägt.

12. Vorrichtung nach einem der Ansprüche 1 bis 11, **dadurch gekennzeichnet, dass** die Dichtkörper (1, 3) jeweils durch Einleiten eines Druckmediums über den Druckanschluss so weit aufblasbar sind, dass ihr Durchmesser um zwischen 50% und 100% zunimmt.

13. Vorrichtung nach einem der Ansprüche 1 bis 12, **dadurch gekennzeichnet, dass** die Durchmesser des ersten Dichtkörpers (1) und des zweiten Dichtkörpers (3) zwischen 80mm und 100mm betragen.

14. Vorrichtung nach einem der Ansprüche 1 bis 13, **dadurch gekennzeichnet, dass** die Länge des Zwischenstücks (4) zwischen 100mm und 400mm beträgt.

15. Verfahren zur Verwendung der Vorrichtung nach einem der Ansprüche 1 bis 14, **dadurch gekennzeichnet, dass** die Vorrichtung in eine Rohrverbindung eingebracht und derart positioniert wird, dass das Zwischenstück (4) auf der Höhe einer möglicherweise undichten Stelle liegt, worauf über eine mit dem Druckluftanschluss (13) verbundene Druckluftleitung (14) ein Druckmedium in den Hohlraum (10) eingeleitet wird und so der erste Dichtkörper (1) und der zweite Dichtkörper (3) so weit aufgeblasen werden, dass sie das Rohr jeweils dicht verschliessen und einen Prüfraum abtrennen, dann über eine mit dem Stoffanschluss verbundene Stoffzuleitung (16) Druckmedium durch die Abgabeöffnung (18) in den Prüfraum geleitet und überprüft wird, ob Druckmedium aus dem Prüfraum entweicht und, falls dies der Fall ist, das Vorliegen einer undichten Stelle in einem den Prüfraum umgebenden Reparaturabschnitt der Rohrverbindung festgestellt wird.

16. Verfahren nach Anspruch 15, **dadurch gekennzeichnet, dass** nach dem Aufblasen des ersten Dichtkörpers (1) und des zweiten Dichtkörpers (3) und vor der Feststellung, ob eine undichte Stelle vorliegt, überprüft wird, ob die Dichtkörper (1, 3) das Rohr jeweils dicht verschliessen, indem Druckmedium in den Prüfraum eingeleitet wird und allfällig an den Dichtkörpern (1, 3) auftretende Geräusche festgestellt werden.

17. Verfahren nach Anspruch 15 oder 16, **dadurch gekennzeichnet, dass** nach der Feststellung des Vorliegens einer undichten Stelle durch die mit dem Stoffanschluss (15) verbundene Stoffzuleitung (16) ein aushärtendes Dichtmittel zugeführt wird, welches durch die Abgabeöffnung (18) in den Prüfraum geleitet wird und die Dichtkörper (1, 3) durch Ablassen des Druckmediums in den Grundzustand zurückgeführt, die Vorrichtung von der undichten Stelle entfernt und das Rohr mit einer Spülflüssigkeit durchgespült wird.

18. Verfahren nach Anspruch 17, **dadurch gekennzeichnet, dass** das Dichtmittel eine Mischung aus einem Polyurethan enthaltenden Dichtmittel und einem Härter ist.

## Claims

1. A device for the checking and repairing of pipes, with a first sealing body (1) and a second sealing body (3) spaced apart therefrom in a longitudinal direction, each consisting of an elastically expandable laminar material so as to be inflatable from a basic state by introduction of a pressure medium in such a way that its diameter is larger than in the basic state, and with an intermediate piece (4) that connects the first sealing body (1) and the second sealing body (3), and with an end plate (12) closing off the second sealing body (3) on a rear end, at which plate a pressurised air connection (13) for connecting a pressurised air line (14) and a material feeding connection (15) connected via a connection line (17) to a discharge opening (18) in the area of the intermediate piece (4) for the connection of a material feeding line (16) are arranged, **characterised in that** the intermediate piece (4) is configured as a flexible but otherwise dimensionally stable tube and that the first sealing body (1), the second sealing body (3) and the intermediate piece (4) surround a common cavity (10) to which the pressurised air connection (13) is connected.

2. The device of claim 1, **characterised in that** the flexibility of the intermediate piece (4) is within such a range that the second sealing body (3) can be bent relative to the first sealing body (1) by at least 30°.

3. The device of claim 1 or 2, **characterised in that** the first sealing body (1) and the second sealing body (3) in their basic state each have a larger diameter than the intermediate piece (4).

4. The device of one of claims 1 to 3, **characterised in that** the first sealing body (1) is tapering towards a front end.

5. The device of one of claims 1 to 4, **characterised in that** the first sealing body (1), the second sealing body (3) and the intermediate piece (4) are rotationally symmetrical about a common longitudinal axis (11).

6. The device of one of claims 1 to 5, **characterised in that** the first sealing body (1), the second sealing body (3) and the intermediate piece (4) are made of the same material, wherein the wall thickness of the intermediate piece (4) is larger than the wall thicknesses of the sealing bodies (1, 3).

7. The device of claim 6, **characterised in that** the wall thickness of the intermediate piece (4) is between 3 and 5 times the minimal wall thickness of the sealing bodies (1, 3).

8. The device of one of claims 1 to 7, **characterised in that** the intermediate piece (4) is connected to the first sealing body (1) by means of a rigid first threaded bushing (5), and to the second sealing body (3) through a rigid second threaded bushing (7).

9. The device of claim 8, **characterised in that** the discharge opening (18) is disposed in a wall of the second threaded bushing (7).

10. The device of one of claims 1 to 9, **characterised in that** a camera (22) facing to the outside is arranged on the first threaded bushing (5) or the second threaded bushing (7), the camera being connected with a cable connection (19) on the end plate (12) by means of a connection cable (21).

11. The device of one of claims 1 to 10, **characterised in that** the first sealing body (1) carries an exchangeable tip (2, 2') at a front end.

12. The device of one of claims 1 to 11, **characterised in that** each of the sealing bodies (1, 3) are is inflatable, by introduction of a pressure medium, to an extent that its diameter is increased by between 50 % and 100 %.

13. The device of any one of claims 1 to 12, **characterised in that** the diameters of the first sealing body (1) and the second sealing body (3) are between 80 mm and 100 mm.

14. The device of any one of claims 1 to 13, **characterised in that** the length of the intermediate piece (4) is between 100 mm and 400 mm.

15. A method for the use of the device of one of claims 1 to 14, **characterised in that** the device is inserted into a pipe connection and positioned in a way that the intermediate piece (4) is situated in the area of a possible leakage point, subsequently a pressure medium is introduced into the cavity (10) via a pressurised air line (14) connected to the pressurised air connection (13), and the first sealing body (1) and the second sealing body (3) are thus inflated to the extent that they in each case sealingly close off the pipe and separate a test space, then a pressure medium is introduced into the test space, via a material feeding line (16) connected to the material feeding connection, and through the discharge opening (18), and a check is performed as to whether pressure medium escapes from the test space, and if so, the presence of a leakage point in a repair section of the pipe joint surrounding the test space is detected.

16. The method of claim 15, **characterised in that**, after the inflation of the first sealing body (1) and the second sealing body (3), and before the detection whether a leakage point is present, in each case a check is performed, by introducing pressure medium into the test space and detecting any possible noises occurring at the sealing bodies (1, 3), whether the sealing bodies (1, 3) tightly seal the pipe.

17. The method of claim 15 or 16, **characterised in that**, after detection of the presence of a leakage point, a curable sealing agent is introduced via the material feeding line (16) connected to the material feeding connection (15), the sealing agent being introduced into the test space through the discharge opening (18), and subsequently the sealing bodies (1, 3) are returned to their basic states, the device is removed from the leakage point and the pipe is rinsed with a rinsing medium.

18. The method of claim 17, **characterised in that** the sealing agent is a mixture of a sealing agent containing polyurethane and a curing agent.

## Revendications

1. Dispositif pour le contrôle et la réparation des tuyaux, avec un premier corps d'étanchéité (1), et un second corps d'étanchéité (3) espacé de celui-ci dans une direction longitudinale, chacun étant constitué d'un matériau plan et élastiquement extensible, de telle sorte qu'ils peuvent être gonflés à partir d'un état de base par introduction d'un milieu de pression, de telle sorte que leur diamètre est plus grand que dans l'état de base, et avec une pièce intermédiaire (4) qui relie le premier corps d'étanchéité (1) et le second corps d'étanchéité (3), et avec une plaque de raccord (12), sur une extrémité arrière, fermant le second corps d'étanchéité (3), sur laquelle sont disposés un raccord d'air comprimé (13) pour le raccordement d'une conduite d'air comprimé (14) et un raccord d'alimentation en matériau (15) relié à une ouverture de décharge (18) dans la région de la pièce intermédiaire (4) par une ligne de connexion (17), pour le raccordement d'une ligne d'alimentation en matériau (16), **caractérisé en ce que** la pièce intermédiaire (4) est configurée sous forme d'un tuyau flexible, mais autrement dimensionnellement stable, et le premier corps d'étanchéité (1), le second corps d'étanchéité (3) et la pièce intermédiaire (4) entourent une cavité commune (10) à quelle le raccord d'air comprimé (13) est raccordé.

2. Dispositif selon la revendication 1, **caractérisé en ce que** la flexibilité de la pièce intermédiaire (4) est de telle sorte que le second corps d'étanchéité (3) peut être courbée par rapport au premier corps d'étanchéité (1) d'au moins 30°.

3. Dispositif selon la revendication 1 ou 2, **caractérisé en ce que**, dans l'état de base, le premier corps d'étanchéité (1) et le second corps d'étanchéité (3) respectivement présentent un diamètre plus grand que la pièce intermédiaire (4).

4. Dispositif selon l'une quelconque des revendications 1 à 3, **caractérisé en ce que** le premier corps d'étanchéité (1) est effilé vers une extrémité avant.

5. Dispositif selon l'une quelconque des revendications 1 à 4, **caractérisé en ce que** le premier corps d'étanchéité (1), le second corps d'étanchéité (3) et la pièce intermédiaire (4) sont symétriques en rotation autour d'un axe longitudinal commun (11).

6. Dispositif selon l'une quelconque des revendications 1 à 5, **caractérisé en ce que** le premier corps d'étanchéité (1), le second corps d'étanchéité (3) et la pièce intermédiaire (4) sont constitués du même matériau, l'épaisseur de paroi de la pièce intermédiaire (4) étant plus grande que les épaisseurs de paroi des corps d'étanchéité (1, 3).

7. Dispositif selon la revendication 6, **caractérisé en ce que** l'épaisseur de paroi de la pièce intermédiaire (4) est comprise entre 3 et 5 fois l'épaisseur de paroi minimale des corps d'étanchéité (1, 3).

8. Dispositif selon l'une quelconque des revendications 1 à 7, **caractérisé en ce que** la pièce intermédiaire (4) est reliée au premier corps d'étanchéité (1) par une première douille filetée (5) rigide, et avec le second corps d'étanchéité (3) par une seconde douille filetée (7) rigide.

9. Dispositif selon la revendication 8, **caractérisé en ce que** l'ouverture de décharge (18) est disposée dans une paroi de la seconde douille filetée (7).

10. Dispositif selon l'une quelconque des revendications 1 à 9, **caractérisé en ce que** une caméra (22) orientée vers l'extérieur est disposée dans une ouverture dans la première douille filetée (5) ou la seconde douille filetée (7), la caméra étant reliée à un raccord de câble (19) sur la plaque de raccord (12) par un câble de connexion (21).

11. Dispositif selon l'une quelconque des revendications 1 à 10, **caractérisé en ce que** le premier corps d'étanchéité (1) porte une pointe remplaçable (2, 2') à une extrémité avant.

12. Dispositif selon l'une quelconque des revendications 1 à 11, **caractérisé en ce que** les corps d'étanchéité (1, 3) sont respectivement gonflable par introduction d'un milieu de pression, à un point tel que leur diamètre est augmenté d'entre 50% et 100%.

13. Dispositif selon l'une quelconque des revendications 1 à 12, **caractérisé en ce que** les diamètres du premier corps d'étanchéité (1) et du second corps d'étanchéité (3) sont compris entre 80mm et 100mm.

14. Dispositif selon l'une quelconque des revendications 1 à 13, **caractérisé en ce que** la longueur de la pièce intermédiaire (4) est comprise entre 100mm et 400mm.

15. Procédé pour l'utilisation du dispositif selon l'une quelconque des revendications 1 à 14, **caractérisé en ce que** le dispositif est introduit dans un raccord de tuyau et positionné de telle sorte que la pièce intermédiaire (4) est située dans la région d'une fuite possible, un milieu de pression est ensuite introduit dans la cavité (10) par l'intermédiaire d'une conduite d'air comprimé (14) reliée au raccord de l'air comprimé (13), et le premier corps d'étanchéité (1) et le second corps d'étanchéité (3) sont gonflés jusqu'au point qu'ils ferment hermétiquement le tuyau et séparent un espace d'essai, ensuite un milieu de pression est introduit dans l'espace d'essai par l'intermédiaire de la ligne d'alimentation de matériau (16) reliée au raccord d'alimentation en matériau et à travers l'ouverture de décharge (18), et il est contrôlé si du milieu de pression s'échappe de l'espace d'essai, et si c'est le cas, la présence d'un point de fuite dans une section de réparation du raccord de tuyau entourant l'espace d'essai est détectée.

16. Procédé selon la revendication 15, **caractérisé en ce que**, après le gonflage du premier corps d'étanchéité (1) et le second corps d'étanchéité (3) et avant la détection si un point de fuite est présente, une vérification est effectuée, si les corps d'étanchéité (1, 3) ferment hermétiquement le tuyau, la vérification s'effectuant par l'introduction de milieu de pression dans l'espace d'essai et par la détection des bruits éventuellement survenant dans les corps d'étanchéité (1, 3).

17. Procédé selon la revendication 15 ou 16, **caractérisé en ce que**, après la détection de la présence d'un point de fuite, un agent d'étanchéité durcissable est alimenté par l'intermédiaire de la ligne d'alimentation de matériau (16) reliée au raccord d'alimentation en matériau (15) et introduit dans l'espace d'essai par l'intermédiaire de l'ouverture de décharge (18), et ensuite les corps d'étanchéité (1, 3) sont reportés dans leur état de base, le dispositif est enlevé du point de fuite et le tuyau est rincé avec un milieu de rinçage.

18. Procédé selon la revendication 17, **caractérisé en ce que** l'agent d'étanchéité est un mélange d'un agent d'étanchéité contenant du polyuréthane et un agent de durcissement.
